# EUROPEAN PATENT SPECIFICATION

(11) **EP 4 498 013 B1**
(45) Date of publication and mention of the grant of the patent: **03.06.2026**
(21) Application number: 24189713.1
(22) Date of filing: 19.07.2024
(51) Int. Cl.: F24F 13/02, F16L 25/00, F16L 27/10

(54) **PIPE ASSEMBLY**
ROHRANORDNUNG
ENSEMBLE DE TUYAU

(30) Priority: 25.07.2023 NL 2035472
(43) Date of publication of application: 29.01.2025
(73) Proprietor: Dyka B.V., 8331 LJ Steenwijk (NL)
(72) Inventor: MEPPELINK, Gerrit Berend Jan, 8331 LJ STEENWIJK (NL); ZUURMOND, Johannes, 8331 LJ STEENWIJK (NL); DE BOER, Klaas Alexander, 8331 LJ STEENWIJK (NL); GOOSSENS, Adriaan Jozef Maria, 8331 LJ STEENWIJK (NL); BAIJENSE, Leendert Adrianus, 8331 LJ STEENWIJK (NL)
(74) Representative: Arnold & Siedsma

(56) References cited:
- EP-A1- 2 759 779
- EP-A1- 3 457 014
- KR-A- 20180 089 295
- KR-Y1- 200 447 945

## Description

The invention relates to a pipe assembly comprising an elongated pipe and a pipe coupling for connecting to the pipe, wherein the pipe comprises a cylindrical circumferential wall that has in its cross section a largest pipe width that is at least 1.5 times larger than a largest pipe height transverse thereto, and wherein the pipe coupling comprises an insertion part having an insertion channel with an insertion opening for inserting a distal end of the pipe in an inserting direction into the pipe coupling, wherein the insertion part comprises a casing, a seal on the casing for sealing off against the pipe, a seal holder for holding the seal on the casing, and a lock between the casing and the seal holder.

### BACKGROUND

The invention relates to a pipe assembly comprising an elongated pipe and a pipe coupling for connecting to the pipe, wherein the pipe comprises a cylindrical circumferential wall that has in its cross section a largest pipe width that is at least 1.5 times larger than a largest pipe height transverse thereto, and wherein the pipe coupling comprises an insertion part having an insertion channel with an insertion opening for inserting a distal end of the pipe in an inserting direction into the pipe coupling. An example thereof is the DYKA AIR system, wherein the elongated pipes typically have an oval cross section. The oval cross section provides a large flow capacity and a low installation height, whereby high capacity air ducts can be formed in prefab concrete floors. The distal end of the pipe may optionally be fixated in the insertion part of the pipe coupling by means of glue, adhesive, solvent cement or the like.

KR200447945Y1 discloses a piping connection device, and more specifically, to a device used to interconnect pipes/channels in and on the walls, or under the ceilings, or in and under the floors of a building. This publication thereby discloses a pipe and a pipe coupling according to the preamble of claim 1.

EP2759779A1 discloses a coupling for joining lengths of ventilation ducting or ventilation ductwork components or accessories together.

### SUMMARY OF THE INVENTION

A disadvantage of the use of glue in the known pipe assemblies is that the most suitable glue for making the glue connection is a high solvent glue. This results in the glue connection becoming irreversible and renders the pipe and coupling unsuitable for reuse of fittings and / or pipes.

In the art of plastic pipes, for example plastic sewer pipes, such pipes typically have a circle-cylindrical cross section, and the pipe couplings may have an insertion part that comprises a casing and a seal on the casing for sealing off against the pipe, whereby the tubes can be installed without glue. The seal is typically confined in an internal groove inside the insertion part and kept in place by means of a rigid fixation ring. However this is not suitable with an oval cross section, as an oval seal and an oval fixation ring may fall out of the oval internal groove and may loose its sealing contact with the insertion part and the inserted pipe, in particular when some pressure is exerted causing deformation or flattening of the mayor sides of the circumference of the pipe, which may for example be caused by concrete mortar that is poured over the pipe coupling and the inserted pipe.

It is an object of the present invention to provide a pipe assembly comprising an elongated pipe and a pipe coupling for connecting to the pipe, wherein the pipe comprises a cylindrical circumferential wall that has in its cross section a largest pipe width that is at least **1.5** times larger than a largest pipe height transverse thereto, and wherein the pipe coupling comprises an insertion part having an insertion channel with an insertion opening for inserting a distal end of the pipe in an inserting direction into the pipe coupling, and a seal on the casing for sealing off against the pipe, wherein the seal is properly secured and seals off against the inserted pipe along its entire circumference.

According to a first aspect, the invention provides a pipe assembly comprising an elongated pipe and a pipe coupling for connecting to the pipe, wherein the pipe comprises a cylindrical circumferential wall that has in its cross section a largest pipe width that is at least **1.5** times larger than a largest pipe height transverse thereto, and wherein the pipe coupling comprises an insertion part having an insertion channel with an insertion opening for inserting a distal end of the pipe in an inserting direction into the pipe coupling, wherein the insertion part comprises a casing, a seal on the casing for sealing off against the pipe, a seal holder for holding the seal on the casing, and a lock between the casing and the seal holder, wherein the casing comprises a cylindrical insertion wall that bounds the insertion channel and that has in its cross section transverse to the inserting direction a largest insertion wall width that is at least **1.5** times larger than a largest insertion wall height transverse thereto, wherein the insertion wall merges into a circumferential distal end edge of the casing that extends along the insertion opening, wherein the seal and the seal holder extend along the distal end edge of the casing, wherein the seal seals off against the inserted pipe and the seal holder keeps the seal in place, wherein the seal holder comprises a cylindrical accommodation wall that extends around the insertion wall, wherein the lock comprises a first locking provision on the insertion wall for locking cooperation with a second locking provision on the accommodation wall, wherein the first locking provision comprises a first abutment surface facing away from the distal end edge of the casing, and wherein the second locking provision comprises a second abutment surface that faces and abuts the first abutment surface. The first locking provision comprises a locking hook that projects from the insertion wall away from the insertion channel and that is provided with the first abutment surface, and wherein the second locking provision comprises a locking opening in the accommodation wall that is provided with the second abutment surface, wherein the locking hook extends through the locking opening.

The terms "cylindrical accommodation wall" and "accommodation wall" are used interchangeably throughout the description.

The terms "circumferential distal end" and "distal end" are used interchangeably throughout the description.

The terms "circumferential distal end edge" and "distal end edge" are used interchangeably throughout the description.

The terms "cylindrical insertion wall" and "insertion wall" are used interchangeably throughout the description.

The terms "cylindrical circumferential wall" and "circumferential wall" are used interchangeably throughout the description.

The terms "cylindrical fitting wall" and "fitting wall" are used interchangeably throughout the description.

The terms "cylindrical reinforcement ring" and "reinforcement ring" are used interchangeably throughout the description.

The terms "cylindrical insertion channel" and "insertion channel" are used interchangeably throughout the description.

The invention refers to a cylindrical circumferential wall, cylindrical accommodation wall, cylindrical fitting wall and a cylindrical insertion wall and also cylindrical reinforcement ring, which are defined as a prismatic body having a curvilinear cross section without squares. For these cylindrical walls / ring is defined that a largest width is at least 1.5 larger than a largest height transverse thereto. Examples thereof include but are not limited to are an elliptic cross section, an oblong or non-square rectangle cross section, an oval cross section or an ovoid cross section, and combinations thereof along the circumference. The cross section can be symmetrical or asymmetrical.

The pipe coupling according to the invention typically comprises the seal holder that holds the seal along the distal end edge of the casing. The lock typically comprises the first abutment surface on the casing that faces away from the distal edge, and the second abutment surface on the seal holder that faces the first abutment surface. The facing first abutment surface and second abutment surface has the advantage that they ensure that the seal holder and thereby the seal remains in place, even when some elastically deforming pressure is exerted on the pipe on the longer and flatter mayor sides of the circumference, for example by concrete mortar that is poured over the pipe coupling and the inserted pipe. The casing may follow the elastic deformation of the inserted pipe while the facing first abutment surface and second abutment surface remain in abutment with each other to keep the seal holder and the seal in place.

In an embodiment that can be manufactured efficiently the cooperating first locking provision and second locking provision typically form a one way snap connection that activates by displacement of the seal holder in the inserting direction over the distal end edge of the casing.

In an embodiment the first abutment surface typically extends transverse to the inserting direction, whereby the seal holder maintains its axial position with respect to the casing when the elastic deformation of the inserted pipe transverse to its elongated direction is followed by the casing.

In an embodiment thereof the locking hook typically has a projecting length along the first abutment surface that is longer than a thickness of the accommodation wall along the second abutment surface to ensure the mutual engagement when the casing follows abovementioned elastic deformation.

In an embodiment the locking hook projects along the first abutment surface beyond the accommodation wall over a distance that is typically longer than 1.1 times, preferably longer than 1.5 times, more preferably longer than 2.0 times, and even more preferably longer than 2.5 times a thickness of the accommodation wall along the second abutment surface.

In an embodiment the locking hook projects along the first abutment surface beyond the accommodation wall over a distance that is typically at most 5.0 times, preferably at most 3.0 times, more preferably at most 2.5 times, and even more preferably at most 2.0 times a thickness of the accommodation wall along the second abutment surface.

In an embodiment the locking hook comprises a distal wedge surface, wherein the distal wedge surface extends in the inserting direction obliquely away from the insertion wall to form a one way snap connection that brings the first abutment surface in abutment with the second abutment surface.

In an embodiment the locking hook projects from the insertion wall transverse to a longitudinal symmetry plane in which the cross section of the insertion wall has the largest width, whereby the first abutment surface extends in the direction where a relatively large elastic deformation of the pipe and the casing takes place so as to remain in engagement over such deformation.

In an embodiment the first locking provision comprises multiple locking hooks that are distributed along the insertion opening, and wherein the second locking provision comprises multiple corresponding locking openings.

In a combined embodiment thereof all locking hooks outside the longitudinal symmetry plane project transverse to the longitudinal symmetry plane.

In an embodiment the locking hook is a hollow bushing, wherein the first abutment surface is located at a side of the bushing that faces away from the distal end edge of the casing.

In an embodiment the casing comprises an attachment slot that extends along the circumference of the distal end edge of the casing, and wherein the seal comprises a locking rim that is confined in the attachment slot. The locking rim inside the attachment slot forms a form lock to ensure that the seal follows abovementioned elastic deformations of the inserted pipe and the casing to which it seals off.

In an embodiment the attachment slot opens opposite to the inserting direction towards the distal end edge of the casing, whereby the locking rim can be brought into the locking rim in the same direction as the seal holder.

In an embodiment the seal holder comprises a confinement wall that merges into the accommodation wall, wherein the confinement wall extends along and above the attachment slot and keeps the locking rim confined in the attachment slot.

In an embodiment the seal comprises a first seal lip that extends along the distal end edge of the casing and that extends as from the distal end edge obliquely into the insertion channel to abut the inserted pipe.

In an embodiment the seal comprises a second seal lip that extends along the distal end edge of the casing and that abuts the insertion wall.

In an embodiment the locking rim and the first seal lip and the second seal lip when present form one unity.

Alternatively the seal and the seal holder form one unity to be installed onto the casing in one operation.

In an embodiment the casing is made of a form stable thermoplastic material, in particular polyvinylchloride (PVC).

In an embodiment the seal is made of a flexible material, in particular a natural or a synthetic rubber, such as styrene-butadiene rubber (SBR), or Ethylene-Propylene-Diene-Monomer (EPDM) or Thermoplastic elastomer (TPE).

In an embodiment the seal holder is made from a thermoplastic material, in particular polyvinylchloride (PVC), polyethylene (PE) or polypropylene (PP).

In an embodiment the pipe is made of a form stable thermoplastic material, in particular polyvinylchloride (PVC) or acrylonitrile butadiene styrene (ABS).

In an embodiment the pipe assembly may furthermore comprises an end piece that is at least partially inserted in the distal end of the pipe, wherein the end piece comprises a cylindrical reinforcement ring inside the distal end of the pipe that extends along the circumferential wall and that is in abutment with the circumferential wall. The inserted end piece can counter any elastic deformation of the inserted end of the pipe.

In an embodiment thereof the end piece comprises one or more reinforcement bodies that extend between oppositely located ring sections of the reinforcement ring.

In an embodiment the end piece comprises an abutment edge that merges into the reinforcement ring and that projects radially from the reinforcement ring and abut the distal end of the pipe.

In an embodiment the end piece is made of a form stable thermoplastic material, in particular polyvinyl chloride (PVC) or acrylonitrile butadiene styrene (ABS).

In an embodiment the circumferential wall of the pipe and the insertion wall of the pipe coupling have an oval or elliptic cross section.

In an embodiment the cylindrical circumferential wall preferably has in its cross section a largest pipe width that is at least 2.0 times larger than a largest pipe height transverse thereto, wherein the cylindrical insertion wall has in its cross section transverse to the inserting direction a largest insertion wall width that preferably is at least 2.0 times larger than a largest insertion wall height transverse thereto.

In an embodiment the cylindrical circumferential wall preferably has in its cross section a largest pipe width that is at least 2.5 times larger than a largest pipe height transverse thereto, wherein the cylindrical insertion wall has in its cross section transverse to the inserting direction a largest insertion wall width that preferably is at least 2.5 times larger than a largest insertion wall height transverse thereto.

In an embodiment the cylindrical circumferential wall preferably has in its cross section a largest pipe width that is at least 3.0 times larger than a largest pipe height transverse thereto, wherein the cylindrical insertion wall has in its cross section transverse to the inserting direction a largest insertion wall width that preferably is at least 3.0 times larger than a largest insertion wall height transverse thereto.

In an embodiment the cylindrical circumferential wall preferably has in its cross section a largest pipe width that is at least 3.5 times larger than a largest pipe height transverse thereto, wherein the cylindrical insertion wall has in its cross section transverse to the inserting direction a largest insertion wall width that preferably is at least 3.5 times larger than a largest insertion wall height transverse thereto.

In an embodiment the insertion part allows a misalignment of the inserted pipe of at least 2 degrees, preferably at least 3 degrees, more preferably at least 5 degrees, more preferably at least 10 degrees, most preferably up to 20 degrees.

In an embodiment the pipe coupling comprises multiple insertion parts that are mutually aligned or under an angle with respect to each other.

According to a second aspect, the invention provides a method for the manufacturing of a pipe coupling for connecting to a pipe, wherein the pipe coupling comprises an insertion part having an insertion channel with an insertion opening for inserting a distal end of the pipe in an inserting direction into the pipe coupling, wherein the insertion part comprises a casing, a seal on the casing for sealing off against the pipe, a seal holder for holding the seal on the casing, and a lock between the casing and the seal holder, wherein the casing comprises a cylindrical insertion wall that bounds the insertion channel and that has in its cross section transverse to the inserting direction a largest insertion wall width that is at least 1.5 times larger than a largest insertion wall height transverse thereto, wherein the insertion wall merges into a circumferential distal end edge of the casing that extends along the insertion opening, wherein the seal and the seal holder extend along the distal end edge of the casing, wherein the seal seals off against the inserted pipe and the seal holder keeps the seal in place, wherein the seal holder comprises a cylindrical accommodation wall that extends around the insertion wall, wherein the lock comprises a first locking provision on the insertion wall for locking cooperation with a second locking provision on the accommodation wall, wherein the first locking provision comprises a first abutment surface facing away from the distal end edge of the casing, and wherein the second locking provision comprises a second abutment surface that faces and abuts the first abutment surface, wherein the method comprises the step of manufacturing the casing with the first locking provision, the seal and the seal holder with the second locking provision, and the step of assembling the pipe coupling by moving the seal holder in the inserting direction towards and over the distal end edge of the casing whereby the distal end edge of the casing is received in the accommodation wall and the first locking provision is brought into cooperation with the second locking provision by bringing the first abutment surface in abutment with the second abutment surface.

This method typically can be performed in an efficient manner by bringing the first locking provision and second locking provision in cooperation with each other to install the seal on the casing.

The various aspects and features described and shown in the specification hereinabove can be applied, individually, and alternatively in combination, wherever possible. These individual aspects, in particular the aspects and features described in the attached dependent claims, can be made the subject matter of divisional patent applications.

### BRIEF DESCRIPTION OF THE DRAWINGS

The invention will be elucidated on the basis of an exemplary embodiment shown in the attached drawings, in which:
Figures 1A and 1B are an isometric view and a top view of a pipe assembly comprising two elongated pipes and a pipe coupling according to a first embodiment of the invention that is connected to the elongated pipe;
Figure 2 is an exploded view of the pipe assembly of figures 1A and 1B;
Figures 3A and 3B are an isometric view and a vertical longitudinal section of the pipe coupling of figures 1A and 1B;
Figure 4 is a front view of a casing of the pipe coupling of figures 1A and 1B;
Figure 5 is a pipe coupling according to a second embodiment of the invention;
Figure 6 is an isometric view of a pipe coupling according to a third embodiment of the invention;
Figure 7 is a top view of a pipe assembly comprising three elongated pipes that are interconnected by means of two pipe couplings according to figure 6; and
Figures 8A and 8B are an isometric view and a horizontal longitudinal section of an elongated pipe and a pipe coupling according to a fourth embodiment of the invention.

### DETAILED DESCRIPTION OF THE INVENTION

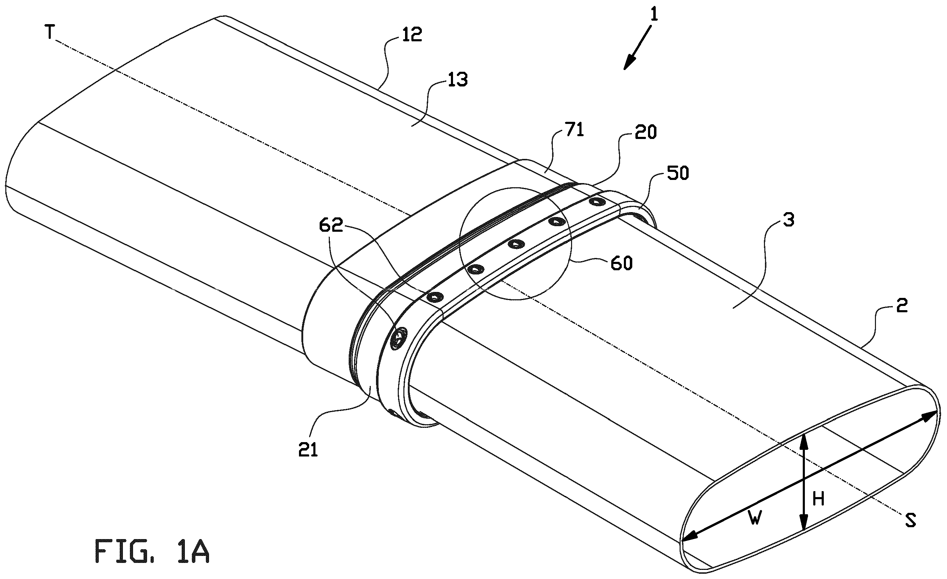

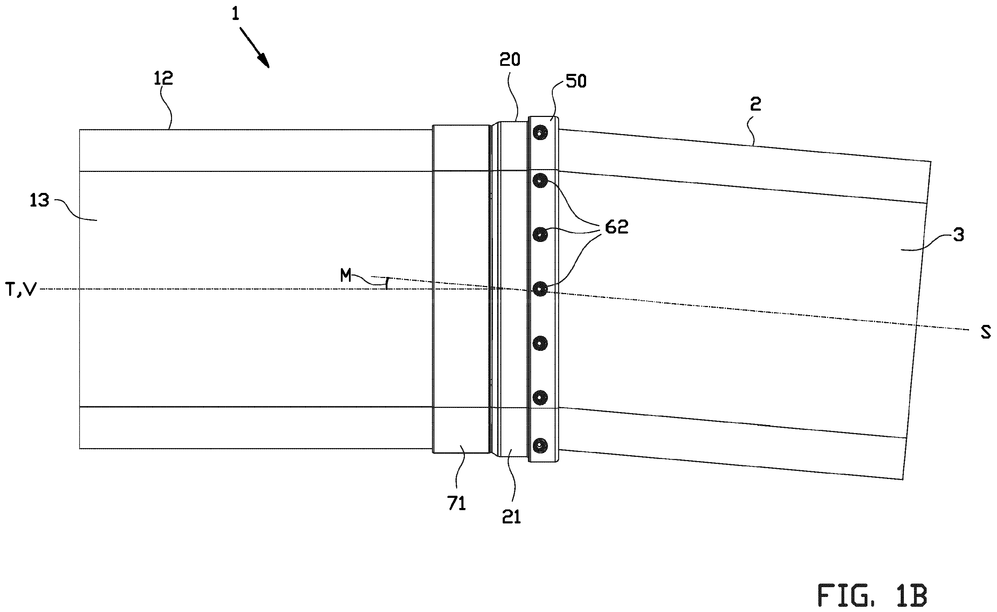

Figures 1A and 1B show a pipe assembly 1 that comprises in this example an elongated first pipe 2 with a first central axis S and an elongated second pipe 12 with a second central axis T that are connected in series to each other by means of a pipe coupling 20 according to a first embodiment of the invention to form an air duct that can for example be integrated or poured in a concrete floor.

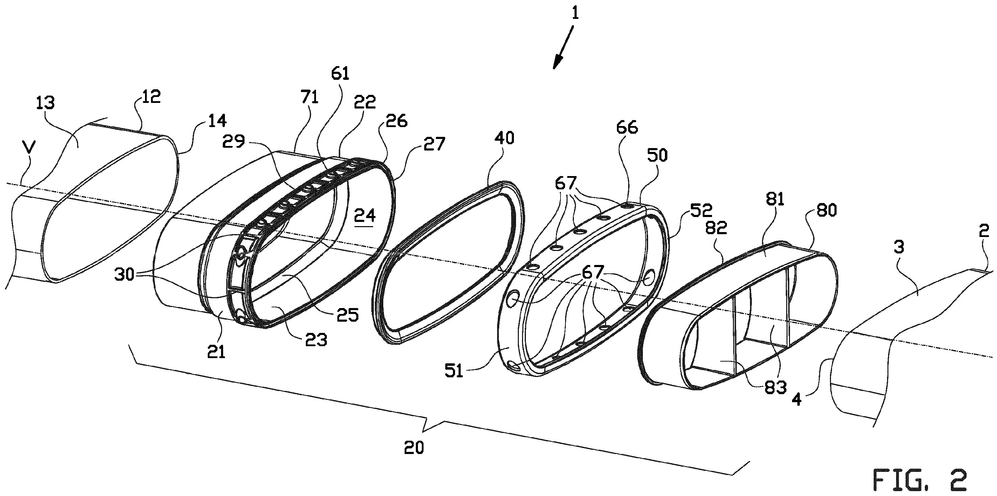

The first pipe 2 comprises a cylindrical first circumferential wall 3 and the second pipe 12 comprises a cylindrical second circumferential wall 13 that both form an oval or elliptic cylinder. Transverse to the respective first central axis S and second central axis T, the first circumferential wall 3 and the second circumferential wall 13 have in this example an oval or elliptic cross section, having the largest width W at the major axis and a smaller largest height H at the minor axis, wherein the largest width W is at least 1.5 times the largest height H. In this example the oval or elliptic cross section is mirror symmetric with respect to the major axis and the minor axis. As shown in figure 2 the first pipe 2 has a first distal edge 4 and the second pipe 12 has a second distal edge 14 that are both inserted in the pipe coupling 20. The first pipe 2 and the second pipe 12 are made of a form stable plastic, in this embodiment polyvinylchloride (PVC).

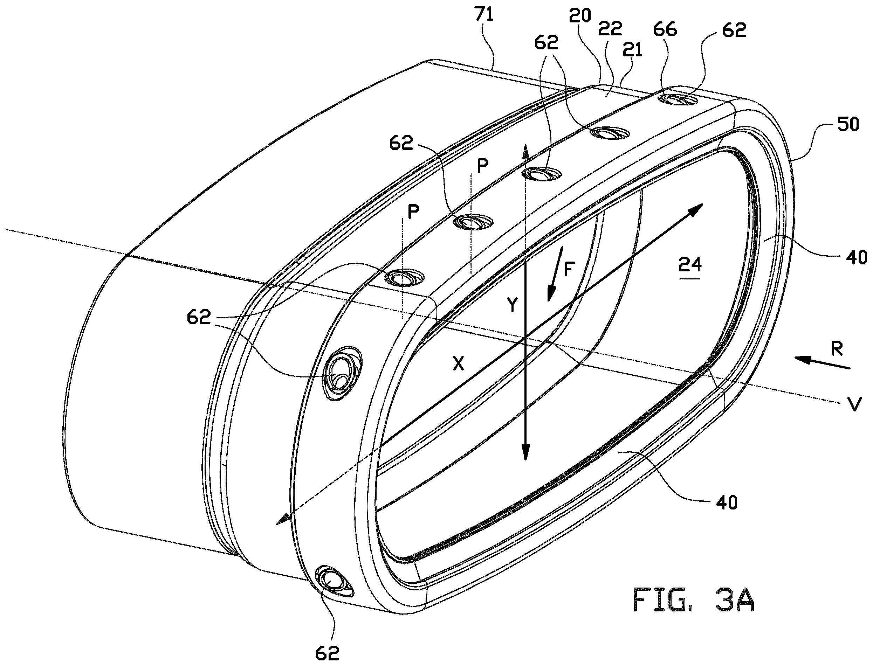

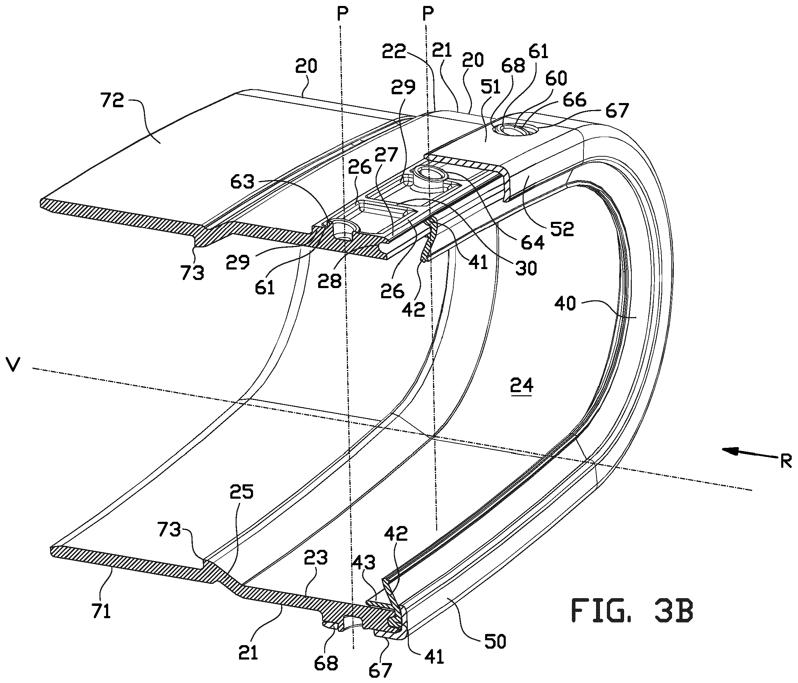

The pipe coupling 20 is also shown in more detail in figures 3A and 3B. The pipe coupling 20 has a central axis V and comprises an insertion part 21 for insertion of the first pipe 2, as shown in figure 2 in an inserting direction R parallel to the central axis V, and a socket 71 for insertion of the second pipe 12. The insertion part 21 comprises a casing 22 that is made of a form stable plastic, in this embodiment polyvinylchloride (PVC). The casing 22 comprises a cylindrical insertion wall 23 that defines a cylindrical insertion channel 24 for the first pipe 2, and a diameter reduction 25 that bounds the end of the insertion channel 24.

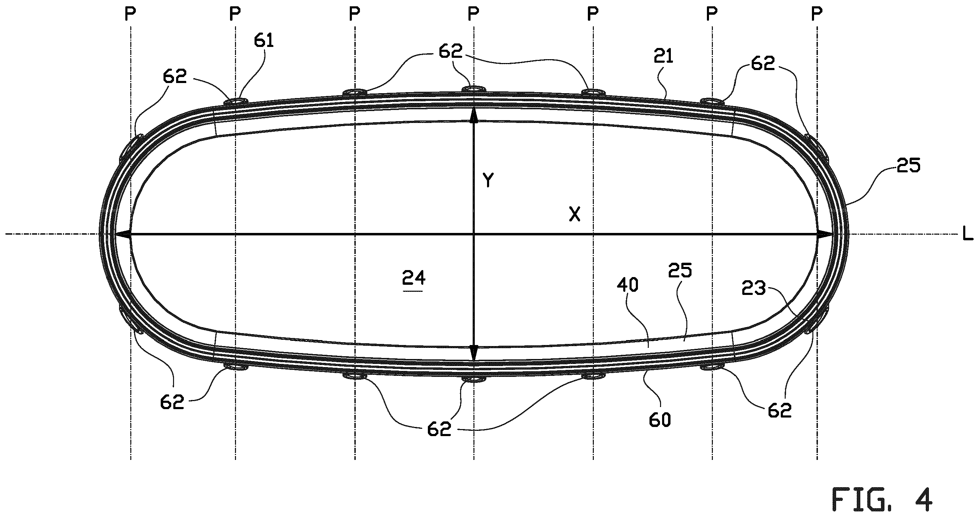

As also shown in figure 4, the insertion wall 23 and the insertion channel 24 have an oval or elliptic cross section, having a largest width X at the major axis and a smaller largest height Y at the minor axis, wherein the largest width X is at least 1.5 times the largest height Y. In this example, the oval or elliptic cross section is mirror symmetric with respect to the major axis and the minor axis. The shape of the cross section of the insertion wall 23 and the insertion channel 24 corresponds with the cross section of the circumferential wall 3 of the first pipe 2 and the second circumferential wall 13 of the second pipe 12. The first pipe 2 fits in the insertion part 21 under a tolerance that allows the first pipe 2 to be with its first central axis S under a misalignment angle M to the central axis V of less than 20 degrees, preferably less than 10 degrees as shown in figure 1B. The misalignment of the first pipe 2 under the misalignment angle M can be in any radial direction with respect to the second pipe 12 angle M. Depending on the misalignment, the first pipe 2 is along the entire diameter reduction 25 in contact therewith, or just in spot contact.

As shown in figure 3B, the casing 22 comprises a distal circumferential reinforcement 26 that projects outwardly and merges into the insertion wall 23. The distal circumferential reinforcement 26 defines a distal end edge 27 of the casing 22 along the circumference of the insertion wall 23 that is thicker than the remainder of the insertion wall 23, and an attachment slot 28 that extends along the circumference of the distal end edge 27 and that is open at the side that faces away from the insertion wall 23. The casing 22 comprises a recessed circumferential reinforcement 29 that projects outwardly and merges into the insertion wall 23. The recessed circumferential reinforcement 29 extends parallel to and spaced apart from the distal circumferential reinforcement 26 and they are along their circumferences connected to each other by means of multiple longitudinal reinforcements 30 that are distributed over the circumference and merge into the insertion wall 23. The distal circumferential reinforcement 26, the longitudinal reinforcements 30 and the recessed circumferential reinforcement 29 all have the same height with respect to the insertion wall 23.

The insertion part 21 comprises a seal 40 that extends along the distal end edge 27. The seal 40 is made of a flexible material, in this embodiment styrene-butadiene rubber (SBR). As best shown in figure 3B, the seal 40 comprises a locking rim 41 that fits inside the attachment slot 28 and that merges into a first seal lip 42 and a second seal lip 43. The first seal lip 42 thereby extends along the distal end edge 27 and obliquely into the insertion channel 24 to abut the inserted first pipe 2. The second seal lip 43 extends along the distal end edge 27 and abuts the insertion wall 23.

The locking rim 41 is confined in the attachment slot 28 under pressure of its elastic material by means of a seal holder 50. As best shown in figure 3B, the seal holder 50 comprises a cylindrical accommodation wall 51 that extends around the insertion wall 23. The accommodation wall 51 has an oval or elliptic cross section transverse to the central axis V in conformity with the insertion wall 23 and engages the distal circumferential reinforcement 26, the longitudinal reinforcements 30 and the recessed circumferential reinforcement 29. The accommodation wall 51 merges into a confinement wall 52 that extends over the distal end edge 27 along the entire circumference thereof. The confinement wall 52 extends transverse to the central axis V of the insertion part 21 and extends over the attachment slot 28 to keep the locking rim 41 confined therein under elastic bias of the elastic material. The seal holder 50 is made of a form stable plastic, in this embodiment polypropylene (PP).

The insertion part 21 comprises a lock 60 between the insertion wall 23 and the seal holder 50. The lock 60 comprises a first locking provision 61 on the outer side of the insertion wall 23 and a second locking provision 66 on the accommodation wall 51 for cooperation with the first locking provision 61. As also shown in figure 4, the first locking provision 61 comprises multiple locking hooks 62 on the insertion wall 23 that project therefrom with their projecting direction P all in the same direction. The second locking provision 66 comprises multiple corresponding locking openings 67 in the accommodation wall 51. The locking hooks 62 are located alternatingly on the longitudinal reinforcements 30. The projecting direction P extends transverse to the longitudinal symmetry plane L of the insertion wall 23 in which the cross section of the insertion wall 23 has the largest width X. The locking hooks 62 are in this example embodied as hollow bushings that form one unity with the insertion wall 23.

As shown in figure 3B, the locking hooks 62 each comprise a first abutment surface 63 that faces away from the distal end edge 27 of the casing 22. The first abutment surface 63 is straight where it extends in the projecting direction P. The locking hooks 62 each comprise a straight distal wedge surface 64 that extends in the inserting direction R obliquely away from the insertion wall 23 and from the central axis V. At the side of the distal end edge 27 of the casing 22, the distal wedge surface 64 extends at a radial height that is equal to the height of the distal circumferential reinforcement 26.

The locking openings 67 each comprise an internal second abutment surface 68 that faces and abuts the first abutment surface 63 and that extends parallel thereto along the mutual abutment. At the side where the first abutment surface 63 ends, the distal wedge surface 64 and thereby the first abutment surface 63 extends in the projecting direction P beyond the accommodation wall 51 of the seal holder 50. This ensures that the first abutment surfaces 63 and the second abutment surfaces 68 remain engaged when the casing 22 locally bends or deforms elastically at the distal end edge 27 with respect to the seal holder 50 in an inward direction F substantially transverse to the longitudinal symmetry plane L of the insertion wall 23. The local elastic deformation is for example caused by the weight of poured concrete mortar. In this inward direction F the casing 22 has a lower rigidity when compared with the rigidity in the longitudinal symmetry plane L. As the first abutment surfaces 63 and the second abutment surfaces 68 remain engaged under such local bending of the casing 22, the seal holder 50 remains in place and the locking rim 41 of the seal 40 remains confined in the attachment slot 28.

The insertion part 21 is assembled by firstly placing the seal 40 along the distal end edge 27 of the casing 22, wherein the locking rim 41 is inserted in the attachment slot 28. Subsequently the seal holder 50 is placed in the insertion direction R over the distal end edge 27 whereby the accommodation wall 51 slides over the distal wedge surfaces 64 to be elastically widened. Finally the confinement wall 52 engages the seal 40 above the locking rim 41 whereby the seal material between the attachment slot 28 and the confinement wall 52 is elastically stretched out until it lets the locking hooks 62 all snap into the locking openings 67 to bring the first abutment surfaces 63 permanently in contact with the second abutment surfaces 68.

The socket 71 comprises a socket wall 72 in which the second pipe 12 can be inserted under a tight fitting. The socket wall 72 is in this embodiment a continuation of the casing 22 of the insertion part 21. The socket wall 42 also merges into an end abutment 73 that extends along the socket wall 72 and that radially projects inwards to come in abutment with the second distal end 14 of the inserted second pipe 12. The inserted second pipe 12 can optionally be permanently be secured to the socket 71 by means of a glue, adhesive, solvent cement, tape or the like.

The pipe assembly 1 furthermore comprises an end piece 80 that is inserted in the first pipe 2. The end piece 80 comprises a cylindrical reinforcement ring 81 inside the first pipe that extends along the first circumferential wall 3 and that is in abutment with the first circumferential wall 3. The cylindrical reinforcement ring 81 merges into a radially projecting abutment edge 82 that abuts the first distal edge 4 of the first pipe 2. In conformity with the first circumferential wall 3 of the first pipe 2, the cylindrical reinforcement ring 81 has an oval or elliptic cross section, having the largest width at the major axis and a smaller largest height at the minor axis, wherein the largest width is at least 1.5 times the largest height. The end piece 80 comprises one, two or more, in this embodiment two reinforcement bodies 83 that extend between oppositely located ring sections of the reinforcement ring 81. The reinforcement bodies 83 are in this example embodied as flat plates that extend parallel to each other and parallel to the first center line S. The end piece 80 is made of a form stable plastic, in this embodiment polyvinylchloride (PVC). The inserted end piece 80 reinforces the inserted part of the first pipe 2 to prevent local impression of the first circumferential wall 3, for example caused by the weight of poured concrete mortar, whereby the seal 40 remains in sealing contact with the first pipe 2. The end piece 80 remains inserted in the first pipe 2 by confinement inside the insertion part 21, but may optionally be fixated by applying glue adhesive, solvent cement, or the like.

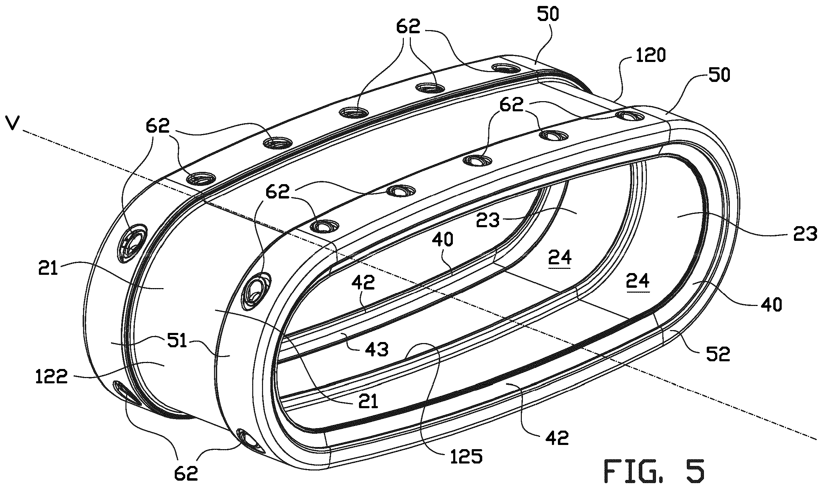

Figure 5 shows a pipe coupling 120 according to a second embodiment of the invention to connect the first pipe 2 and the second pipe 12 in series to each other to form the air duct. The features of the pipe coupling 120 that correspond with the first pipe coupling 20 are provided with the same reference numbers. The pipe coupling 120 comprises two insertion parts 21 with a common casing 122 and a common central diameter reduction 125 to form a straight coupling or bushing that connects the first pipe 2 and the second pipe 12 aligned with each other perpendicular to the central axis V. The common central diameter reduction 125 forms a centering rim to ensure that the inserted first pipe 2 and second pipe 12 both maximally reach the middle of the pipe coupling 120. Alternatively the insertion parts 21 are under an angle to each other to form part of a fitting, for example a bow coupling, a T-coupling, X-coupling or reducer. A further not shown embodiment comprises multiple insertion parts 21 to form a T-coupling or X-coupling.

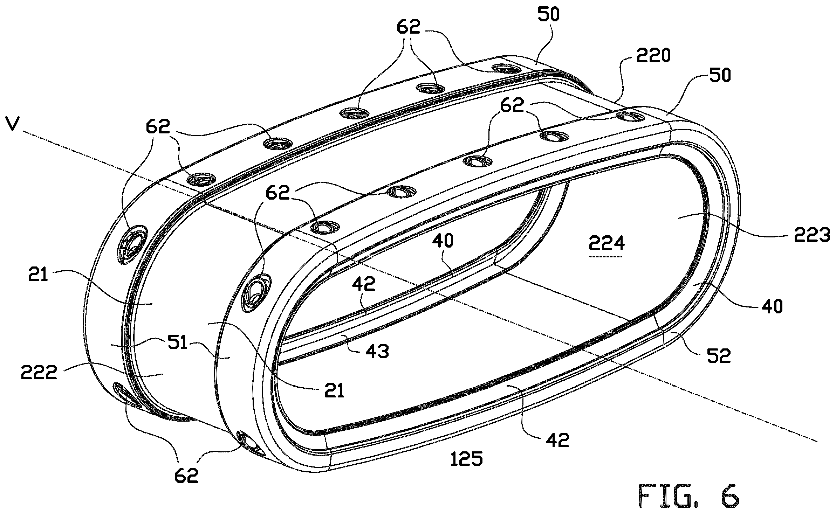

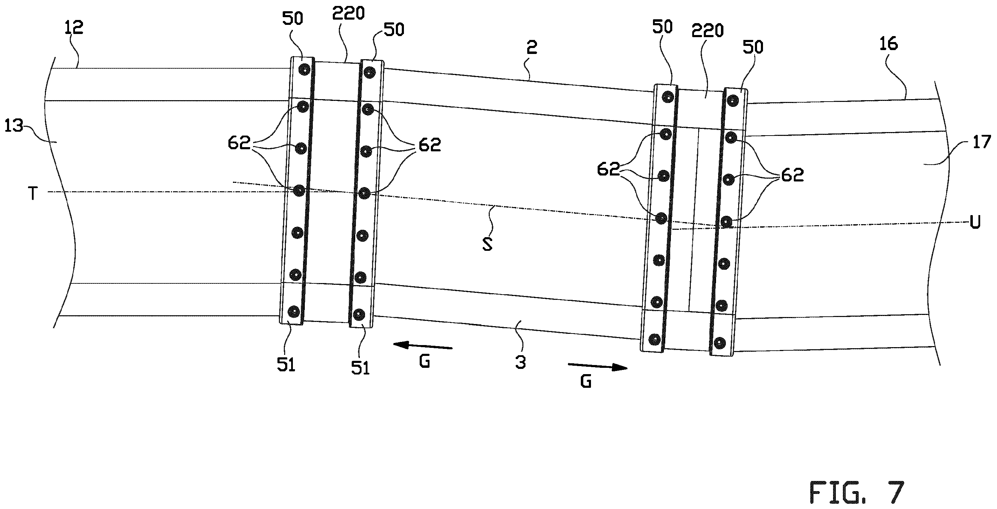

Figure 6 shows a pipe coupling 220 according to a third embodiment of the invention to connect the first pipe 2 and the second pipe 12 in series to each other to form the air duct. The features of the pipe coupling 120 that correspond with the first pipe coupling 20 are provided with the same reference numbers. Figure 7 shows a typical implementation thereof, wherein two of these pipe couplings 220 connect the first pipe 2 and the second pipe 12 in series with an elongated third pipe 16 with a third central axis U and with the same features as the first pipe 2 and the second pipe 12. The third pipe 16 comprises a third circumferential wall 17 that is in cross section and material identical to the first circumferential wall 3 and the second circumferential wall 13. The second pipe 12 and the third pipe 16 are misaligned and extend offset with respect to each other. The first pipe 2 bridges the second pipe 12 and third pipe 16 by means of the pipe couplings 220, wherein the pipe couplings 220 each absorb the misalignment with their respective inserted pipes 2, 12, 16.

As shown in figure 6, the pipe coupling 220 comprises two insertion parts 21 with a common casing 222, that forms one continuous insertion channel 224. The pipe coupling 220 can thereby be slid in its entirety over the inserted pipe 2, 12, 16 under the friction of the seals 40. In this example, as shown in figure 7, the two pipe couplings 220 are slid entirely over both ends of the first pipe 2 while the second pipe 12 and the third pipe 16 are pre-installed and fixated. The second pipe 12 and the third pipe 16 are for example integrated in prefab concrete floor elements, wherein the second pipe 12 and the third pipe 16 are slightly misaligned due to accumulated deviations in the manufacturing of the floor elements and the positioning thereof with respect to each other at the building site. The end pieces 80 are inserted into the meeting ends of the already installed second pipe 12 and the third pipe 16, and into the opposite ends of the first pipe 2 to be installed. The first pipe 2 is positioned between the second pipe 12 and the third pipe 16 and subsequently the pipe couplings 220 are manually slid in one or more directions G under the friction of the seals 40 over first pipe 12 and the third pipe 16 and manipulated such that the meeting ends are practically in the middle of the pipe couplings 220. Finally any remaining space around the exposed pipes 2, 12, 16 and pipe couplings 220 can be filled with concrete mortar.

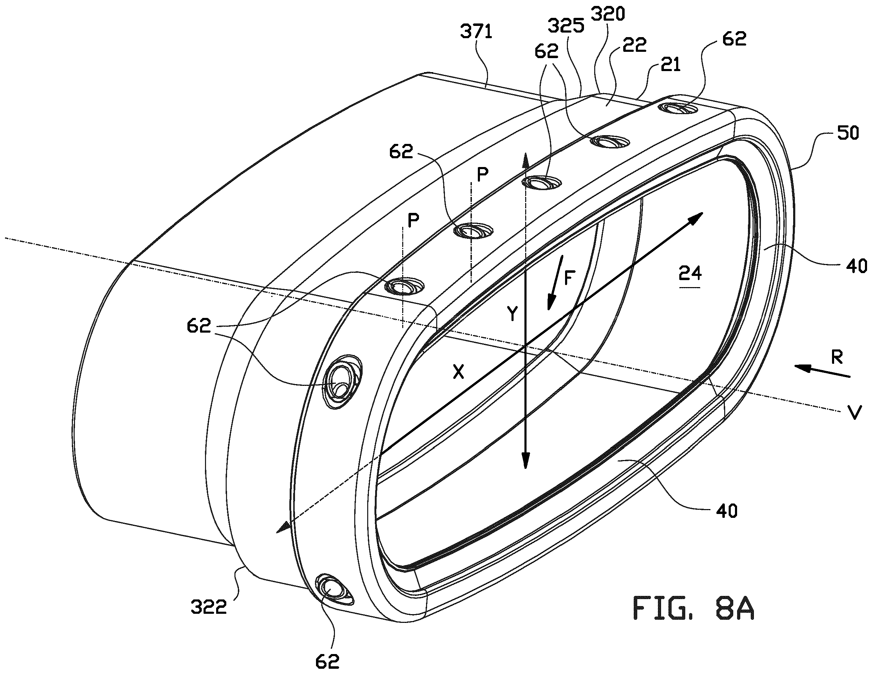

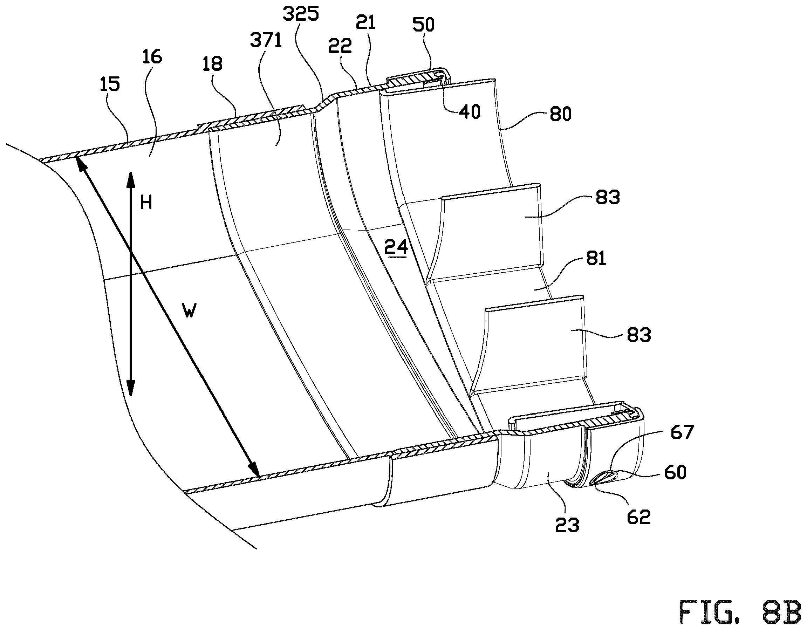

Figures 8A and 8B show a pipe coupling 320 according to a fourth embodiment of the invention that is irreversibly or permanently connected to a schematically indicated fitting 15. The features of the pipe coupling 320 that correspond with the first pipe coupling 20 are provided with the same reference numbers. The insertion part 21 of the pipe coupling 320 is adapted for insertion of the first pipe 2 in which the end piece 80 is inserted, wherein the pipe coupling 320 allows the misalignment M of the first pipe 2.

The fitting 15 comprises a cylindrical fitting wall 16 that merges into a wider fitting socket 18. The fitting wall 16 and the socket 18 have in this example an oval or elliptic cross section, having the largest width W at the major axis and a smaller largest height H at the minor axis, wherein the largest width W is at least 1.5 times the largest height H. In this example the oval or elliptic cross section is mirror symmetric with respect to the major axis and the minor axis. The fitting 15 may be separately manufactured fitting, for example a bow coupling, a T-coupling, X-coupling or reducer.

The insertion wall 22 forms part of a casing 322 of the pipe coupling 320. The insertion wall 22 merges via a diameter reduction 325 into a male insert part 371. This male insert part 371 can be inserted under a tight fitting in the socket 18 and can be permanently secured therein by applying a solvent cement or glue.

It is to be understood that the above description is included to illustrate the operation of the preferred embodiments and is not meant to limit the scope of the invention.

## Claims

1. Pipe assembly (1) comprising an elongated pipe (2) and a pipe coupling (20) for connecting to the pipe, wherein the pipe (2) comprises a cylindrical circumferential wall (3) that has in its cross section a largest pipe width (W) that is at least 1.5 times larger than a largest pipe height (H) transverse thereto, and wherein the pipe coupling (20) comprises an insertion part (21) having an insertion channel (24) with an insertion opening for inserting a distal end (4) of the pipe (2) in an inserting direction (R) into the pipe coupling (20), wherein the insertion part (21) comprises a casing (22), a seal (40) on the casing for sealing off against the pipe, a seal holder (50) for holding the seal on the casing, and a lock (60) between the casing and the seal holder, wherein the casing (22) comprises a cylindrical insertion wall (23) that bounds the insertion channel and that has in its cross section transverse to the inserting direction a largest insertion wall width (X) that is at least 1.5 times larger than a largest insertion wall height (Y) transverse thereto, wherein the insertion wall merges into a circumferential distal end edge (27) of the casing (22) that extends along the insertion opening, wherein the seal (40) and the seal holder (50) extend along the distal end edge (27) of the casing, wherein the seal (40) seals off against the inserted pipe (2) and the seal holder (50) keeps the seal in place, wherein the seal holder comprises a cylindrical accommodation wall (51) that extends around the insertion wall (23), wherein the lock (60) comprises a first locking provision (61) on the insertion wall (23) for locking cooperation with a second locking provision (66) on the accommodation wall (51), wherein the first locking provision (61) comprises a first abutment surface (63) facing away from the distal end edge (27) of the casing (22), wherein the second locking provision (66) comprises a second abutment surface (68) that faces and abuts the first abutment surface (63), **characterized in that** the first locking provision (61) comprises a locking hook (62) that projects from the insertion wall (23) away from the insertion channel (24) and that is provided with the first abutment surface (63), and wherein the second locking provision (66) comprises a locking opening (67) in the accommodation wall (51) that is provided with the second abutment surface (68), wherein the locking hook (62) extends through the locking opening (67).

2. Pipe assembly (1) according to claim 1, wherein the cooperating first locking provision (61) and second locking provision (66) form a one way snap connection that activates by displacement of the seal holder (50) in the inserting direction (R) over the distal end edge (27) of the casing (22).

3. Pipe assembly (1) according to any one of the preceding claims, wherein the first abutment surface (63) extends transverse to the inserting direction (R).

4. Pipe assembly (1) according to any one of the preceding claims, wherein the locking hook (62) has a projecting length along the first abutment surface (63) that is longer than a thickness of the accommodation wall (51) along the second abutment surface (68).

5. Pipe assembly (1) according to any one of the preceding claims, wherein the locking hook (62) projects along the first abutment surface (63) beyond the accommodation wall (51) over a distance that is longer than 1.1 times, preferably longer than 1.5 times, more preferably longer than 2.0 times, and even more preferably longer than 2.5 times a thickness of the accommodation wall (51) along the second abutment surface (68), wherein the locking hook (62) projects along the first abutment surface (63) beyond the accommodation wall (51) over a distance that is at most 5.0 times, preferably at most 3.0 times, more preferably at most 2.5 times, and even more preferably at most 2.0 times a thickness of the accommodation wall (51) along the second abutment surface (68).

6. Pipe assembly (1) according to any one of the preceding claims, wherein the locking hook (62) comprises a distal wedge surface (64), wherein the distal wedge surface extends in the inserting direction (R) obliquely away from the insertion wall (23).

7. Pipe assembly (1) according to any one of the preceding claims, wherein the locking hook (62) projects from the insertion wall (23) transverse to a longitudinal symmetry plane (L) in which the cross section of the insertion wall (23) has the largest width.

8. Pipe assembly (1) according to any one of the preceding claims, wherein the first locking provision (61) comprises multiple locking hooks (62) that are distributed along the insertion opening, and wherein the second locking provision (66) comprises multiple corresponding locking openings (67).

9. Pipe assembly (1) according to claims 7 and 8, wherein all locking hooks (62) outside the longitudinal symmetry plane (L) project transverse to the longitudinal symmetry plane (L).

10. Pipe assembly (1) according to any one of the preceding claims, wherein the locking hook (62) is a hollow bushing, wherein the first abutment surface (63) is located at a side of the bushing that faces away from the distal end edge (27) of the casing (22).

11. Pipe assembly (1) according to any one of the preceding claims, wherein the casing (22) comprises an attachment slot (28) that extends along the circumference of the distal end edge (27) of the casing, and wherein the seal (40) comprises a locking rim (41) that is confined in the attachment slot.

12. Pipe assembly (1) according to claim 11, wherein the attachment slot (28) opens opposite to the inserting direction (R) towards the distal end edge of the casing (22).

13. Pipe assembly (1) according to claim 11 or 12, wherein the seal holder (50) comprises a confinement wall (52) that merges into the accommodation wall (51), wherein the confinement wall (52) extends along and above the attachment slot (28) and keeps the locking rim (41) confined in the attachment slot.

14. Pipe assembly (1) according to any one of the preceding claims, wherein the seal (40) comprises a first seal lip (42) that extends along the distal end edge (27) of the casing (22) and that extends as from the distal end edge (27) obliquely into the insertion channel (24) to abut the inserted pipe (2),
wherein the seal (40) comprises a second seal lip (43) that extends along the distal end edge (27) of the casing (22) and that abuts the insertion wall (23).

15. Pipe assembly (1) according to any combination of the claims 11-14, wherein the locking rim (41) and the first seal lip (42) and the second seal lip (43) when present form one unity.

16. Pipe assembly (1) according to any one of the claims 1-14, wherein the seal (40) and the seal holder (50) form one unity.

17. Pipe assembly (1) according to any one of the preceding claims, wherein the casing (22) is made of a form stable thermoplastic material, in particular polyvinylchloride (PVC),
wherein the seal (40) is made of a flexible material, in particular a natural or a synthetic rubber, such as styrene-butadiene rubber (SBR), or Ethylene-Propylene-Diene-Monomer (EPDM) or Thermoplastic elastomer (TPE),
wherein the seal holder (50) is made from a thermoplastic material, in particular polyvinylchloride (PVC), polyethylene (PE) or polypropylene (PP),
wherein the pipe (2) is made of a form stable thermoplastic material, in particular polyvinylchloride (PVC) or acrylonitrile butadiene styrene (ABS).

18. Pipe assembly (1) according to any one of the preceding claims, furthermore comprising an end piece (80) that is at least partially inserted in the distal end of the pipe (2), wherein the end piece comprises a cylindrical reinforcement ring (81) inside the distal end of the pipe that extends along the circumferential wall (3) and that is in abutment with the circumferential wall.

19. Pipe assembly (1) according to the previous claim, wherein the end piece (80) is made of a form stable thermoplastic material, in particular polyvinyl chloride (PVC) or acrylonitrile butadiene styrene (ABS)

20. Pipe assembly (1) according to any one of the preceding claims, wherein the circumferential wall of the pipe (2) and the insertion wall (23) of the pipe coupling (20) have an oval, or elliptic, or an ovoid cross section, and combinations thereof, and preferably the cross section is symmetrical or asymmetrical.

21. Pipe assembly (1) according to any one of the preceding claims, wherein the insertion part (21) allows a misalignment of the inserted pipe (2) of at least 2 degrees, preferably at least 3 degrees, more preferably at least 5 degrees, more preferably at least 10 degrees, most preferably up to 20 degrees.

22. Pipe assembly (1) according to any one of the preceding claims, wherein the pipe coupling (20) comprises multiple insertion parts (21) that are mutually aligned or under an angle with respect to each other.

23. Method for the manufacturing of a pipe coupling (20) for connecting to a pipe, wherein the pipe coupling (20) comprises an insertion part (21) having an insertion channel (24) with an insertion opening for inserting a distal end (4) of the pipe (2) in an inserting direction (R) into the pipe coupling (20), wherein the insertion part (21) comprises a casing (22), a seal (40) on the casing for sealing off against the pipe, a seal holder (50) for holding the seal on the casing, and a lock (60) between the casing and the seal holder, wherein the casing (22) comprises a cylindrical insertion wall (23) that bounds the insertion channel and that has in its cross section transverse to the inserting direction a largest insertion wall width (X) that is at least 1.5 times larger than a largest insertion wall height (Y) transverse thereto, wherein the insertion wall merges into a circumferential distal end edge (27) of the casing (22) that extends along the insertion opening, wherein the seal (40) and the seal holder (50) extend along the distal end edge (27) of the casing, wherein the seal (40) seals off against the inserted pipe (2) and the seal holder (50) keeps the seal in place, wherein the seal holder comprises a cylindrical accommodation wall (51) that extends around the insertion wall (33), wherein the lock (60) comprises a first locking provision (61) on the insertion wall (23) for locking cooperation with a second locking provision (66) on the accommodation wall (51), wherein the first locking provision (61) comprises a first abutment surface (63) facing away from the distal end edge (27) of the casing, wherein the second locking provision (66) comprises a second abutment surface (68) that faces and abuts the first abutment surface (63), and wherein the first locking provision (61) comprises a locking hook (62) that projects from the insertion wall (23) away from the insertion channel (24) and that is provided with the first abutment surface (63), and wherein the second locking provision (66) comprises a locking opening (67) in the accommodation wall (51) that is provided with the second abutment surface (68), wherein the locking hook (62) extends through the locking opening (67),
wherein the method comprises the step of manufacturing the casing (22) with the first locking provision (61), the seal (40) and the seal holder (50) with the second locking provision (66), and the step of assembling the pipe coupling (20) by moving the seal holder (50) in the inserting direction (R) towards and over the distal end edge (27) of the casing whereby the distal end edge (27) of the casing is received in the accommodation wall (51) and the first locking provision (61) is brought into cooperation with the second locking provision (66) by bringing the first abutment surface (63) in abutment with the second abutment surface (68).

## Patentansprüche

1. Rohranordnung (1), umfassend ein längliches Rohr (2) und eine Rohrkupplung (20) zum Verbinden mit dem Rohr, wobei das Rohr (2) eine zylindrische Umfangswand (3) umfasst, die in ihrem Querschnitt eine größte Rohrbreite (W) aufweist, die mindestens 1,5-mal größer als eine größte Rohrhöhe (H) quer dazu ist, und wobei die Rohrkupplung (20) ein Einführteil (21) umfasst, das einen Einführkanal (24) mit einer Einführöffnung zum Einführen eines distalen Endes (4) des Rohrs (2) in einer Einführrichtung (R) in die Rohrkupplung (20) aufweist, wobei das Einführteil (21) ein Gehäuse (22), eine Dichtung (40) an dem Gehäuse zum Abdichten gegen das Rohr, einen Dichtungshalter (50) zum Halten der Dichtung an dem Gehäuse und eine Verriegelung (60) zwischen dem Gehäuse und dem Dichtungshalter umfasst, wobei das Gehäuse (22) eine zylindrische Einführwand (23) umfasst, die den Einführkanal umgrenzt und die in ihrem Querschnitt quer zu der Einführrichtung eine größte Einführwandbreite (X) aufweist, die mindestens 1,5-mal größer als eine größte Einführwandhöhe (Y) quer dazu ist, wobei die Einführwand in eine umlaufende distale Endkante (27) des Gehäuses (22) übergeht, die sich entlang der Einführöffnung erstreckt, wobei sich die Dichtung (40) und der Dichtungshalter (50) entlang der distalen Endkante (27) des Gehäuses erstrecken, wobei die Dichtung (40) gegen das eingeführte Rohr (2) abdichtet und der Dichtungshalter (50) die Dichtung an der Stelle hält, wobei der Dichtungshalter eine zylindrische Aufnahmewand (51) umfasst, die sich um die Einführwand (23) erstreckt, wobei die Verriegelung (60) eine erste Verriegelungsvorkehrung (61) an der Einführwand (23) zum verriegelnden Zusammenwirken mit einer zweiten Verriegelungsvorkehrung (66) an der Aufnahmewand (51) umfasst, wobei die erste Verriegelungsvorkehrung (61) eine erste Anlageoberfläche (63) umfasst, die von der distalen Endkante (27) des Gehäuses (22) abgewandt ist, wobei die zweite Verriegelungsvorkehrung (66) eine zweite Anlageoberfläche (68) umfasst, die der ersten Anlageoberfläche (63) zugewandt ist und daran anliegt, **dadurch gekennzeichnet, dass** die erste Verriegelungsvorkehrung (61) einen Verriegelungshaken (62) umfasst, der von der Einführwand (23) weg von dem Einführkanal (24) vorsteht und der mit der ersten Anlageoberfläche (63) bereitgestellt ist, und wobei die zweite Verriegelungsvorkehrung (66) eine Verriegelungsöffnung (67) in der Aufnahmewand (51) umfasst, die mit der zweiten Anlageoberfläche (68) bereitgestellt ist, wobei sich der Verriegelungshaken (62) durch die Verriegelungsöffnung (67) erstreckt.

2. Rohranordnung (1) nach Anspruch 1, wobei die erste Verriegelungsvorkehrung (61) und die zweite Verriegelungsvorkehrung (66), die zusammenwirken, eine Einweg-Schnappverbindung ausbilden, die durch Verschiebung des Dichtungshalters (50) in der Einführrichtung (R) über die distale Endkante (27) des Gehäuses (22) aktiviert wird.

3. Rohranordnung (1) nach einem der vorhergehenden Ansprüche, wobei sich die erste Anlageoberfläche (63) quer zu der Einführrichtung (R) erstreckt.

4. Rohranordnung (1) nach einem der vorhergehenden Ansprüche, wobei der Verriegelungshaken (62) eine vorstehende Länge entlang der ersten Anlageoberfläche (63) aufweist, die länger als eine Dicke der Aufnahmewand (51) entlang der zweiten Anlageoberfläche (68) ist.

5. Rohranordnung (1) nach einem der vorhergehenden Ansprüche, wobei der Verriegelungshaken (62) entlang der ersten Anlageoberfläche (63) über die Aufnahmewand (51) hinaus über eine Strecke vorsteht, die länger als 1,1-mal, bevorzugt länger als 1,5-mal, stärker bevorzugt länger als 2,0-mal und noch stärker bevorzugt länger als 2,5-mal eine Dicke der Aufnahmewand (51) entlang der zweiten Anlageoberfläche (68) ist, wobei der Verriegelungshaken (62) entlang der ersten Anlageoberfläche (63) über die Aufnahmewand (51) hinaus um eine Strecke vorsteht, die höchstens 5,0-mal, bevorzugt höchstens 3,0-mal, stärker bevorzugt höchstens 2,5-mal und noch stärker bevorzugt höchstens 2,0-mal eine Dicke der Aufnahmewand (51) entlang der zweiten Anlageoberfläche (68) ist.

6. Rohranordnung (1) nach einem der vorhergehenden Ansprüche, wobei der Verriegelungshaken (62) eine distale Keiloberfläche (64) umfasst, wobei sich die distale Keiloberfläche in der Einführrichtung (R) schräg von der Einführwand (23) weg erstreckt.

7. Rohranordnung (1) nach einem der vorhergehenden Ansprüche, wobei der Verriegelungshaken (62) von der Einführwand (23) quer zu einer Längssymmetrieebene (L) vorsteht, in der der Querschnitt der Einführwand (23) die größte Breite aufweist.

8. Rohranordnung (1) nach einem der vorhergehenden Ansprüche, wobei die erste Verriegelungsvorkehrung (61) vielfache Verriegelungshaken (62) umfasst, die entlang der Einführöffnung verteilt sind, und wobei die zweite Verriegelungsvorkehrung (66) vielfache entsprechende Verriegelungsöffnungen (67) umfasst.

9. Rohranordnung (1) nach den Ansprüchen 7 und 8, wobei alle Verriegelungshaken (62) außerhalb der Längssymmetrieebene (L) quer zur Längssymmetrieebene (L) vorstehen.

10. Rohranordnung (1) nach einem der vorhergehenden Ansprüche, wobei der Verriegelungshaken (62) eine hohle Buchse ist, wobei sich die erste Anlageoberfläche (63) an einer Seite der Buchse befindet, die von der distalen Endkante (27) des Gehäuses (22) abgewandt ist.

11. Rohranordnung (1) nach einem der vorhergehenden Ansprüche, wobei das Gehäuse (22) einen Befestigungsschlitz (28) umfasst, der sich entlang des Umfangs der distalen Endkante (27) des Gehäuses erstreckt, und wobei die Dichtung (40) einen Verriegelungsrand (41) umfasst, der in dem Befestigungsschlitz eingeschlossen ist.

12. Rohranordnung (1) nach Anspruch 11, wobei sich der Befestigungsschlitz (28) entgegengesetzt zu der Einführrichtung (R) zu der distalen Endkante des Gehäuses (22) hin öffnet.

13. Rohranordnung (1) nach Anspruch 11 oder 12, wobei der Dichtungshalter (50) eine Einschlusswand (52) umfasst, die in die Aufnahmewand (51) übergeht, wobei sich die Einschlusswand (52) entlang und oberhalb des Befestigungsschlitzes (28) erstreckt und den Verriegelungsrand (41) in dem Befestigungsschlitz eingeschlossen hält.

14. Rohranordnung (1) nach einem der vorhergehenden Ansprüche, wobei die Dichtung (40) eine erste Dichtungslippe (42) umfasst, die sich entlang der distalen Endkante (27) des Gehäuses (22) erstreckt und die sich ab der distalen Endkante (27) schräg in den Einführkanal (24) erstreckt, um an dem eingeführten Rohr (2) anzuliegen, wobei die Dichtung (40) eine zweite Dichtungslippe (43) umfasst, die sich entlang der distalen Endkante (27) des Gehäuses (22) erstreckt und die an der Einführwand (23) anliegt.

15. Rohranordnung (1) nach einer Kombination der Ansprüche 11-14, wobei der Verriegelungsrand (41) und die erste Dichtungslippe (42) und die zweite Dichtungslippe (43), wenn vorhanden, eine Einheit ausbilden.

16. Rohranordnung (1) nach einem der Ansprüche 1-14, wobei die Dichtung (40) und der Dichtungshalter (50) eine Einheit ausbilden.

17. Rohranordnung (1) nach einem der vorhergehenden Ansprüche, wobei das Gehäuse (22) aus einem formstabilen thermoplastischen Material, insbesondere Polyvinylchlorid (PVC), hergestellt ist, wobei die Dichtung (40) aus einem flexiblen Material, insbesondere einem natürlichen oder einem synthetischen Kautschuk, wie Styrol-Butadien-Kautschuk (SBR), oder Ethylen-Propylen-Dien-Monomer (EPDM) oder thermoplastischem Elastomer (TPE), hergestellt ist, wobei der Dichtungshalter (50) aus einem thermoplastischen Material, insbesondere Polyvinylchlorid (PVC), Polyethylen (PE) oder Polypropylen (PP), hergestellt ist, wobei das Rohr (2) aus einem formstabilen thermoplastischen Material, insbesondere Polyvinylchlorid (PVC) oder Acrylnitril-Butadien-Styrol (ABS), hergestellt ist.

18. Rohranordnung (1) nach einem der vorhergehenden Ansprüche, ferner umfassend ein Endstück (80), das mindestens teilweise in das distale Ende des Rohrs (2) eingeführt ist, wobei das Endstück einen zylindrischen Verstärkungsring (81) im Inneren des distalen Endes des Rohrs umfasst, der sich entlang der Umfangswand (3) erstreckt und der in Anlage mit der Umfangswand steht.

19. Rohranordnung (1) nach dem vorhergehenden Anspruch, wobei das Endstück (80) aus einem formstabilen thermoplastischen Material, insbesondere Polyvinylchlorid (PVC) oder Acrylnitril-Butadien-Styrol (ABS), hergestellt ist.

20. Rohranordnung (1) nach einem der vorhergehenden Ansprüche, wobei die Umfangswand des Rohrs (2) und die Einführwand (23) der Rohrkupplung (20) einen ovalen oder elliptischen oder einen eiförmigen Querschnitt und Kombinationen davon aufweisen und vorzugsweise der Querschnitt symmetrisch oder asymmetrisch ist.

21. Rohranordnung (1) nach einem der vorhergehenden Ansprüche, wobei das Einführteil (21) einen Ausrichtungsfehler des eingeführten Rohrs (2) von mindestens 2 Grad, bevorzugt mindestens 3 Grad, stärker bevorzugt mindestens 5 Grad, stärker bevorzugt mindestens 10 Grad, am stärksten bevorzugt bis zu 20 Grad ermöglicht.

22. Rohranordnung (1) nach einem der vorhergehenden Ansprüche, wobei die Rohrkupplung (20) vielfache Einführteile (21) umfasst, die aufeinander ausgerichtet oder unter einem Winkel zueinander sind.

23. Verfahren zum Fertigen einer Rohrkupplung (20) zum Verbinden mit einem Rohr, wobei die Rohrkupplung (20) ein Einführteil (21) umfasst, das einen Einführkanal (24) mit einer Einführöffnung zum Einführen eines distalen Endes (4) des Rohrs (2) in einer Einführrichtung (R) in die Rohrkupplung (20) aufweist, wobei das Einführteil (21) ein Gehäuse (22), eine Dichtung (40) an dem Gehäuse zum Abdichten gegen das Rohr, einen Dichtungshalter (50) zum Halten der Dichtung an dem Gehäuse und eine Verriegelung (60) zwischen dem Gehäuse und dem Dichtungshalter umfasst, wobei das Gehäuse (22) eine zylindrische Einführwand (23) umfasst, die den Einführkanal umgrenzt und die in ihrem Querschnitt quer zu der Einführrichtung eine größte Einführwandbreite (X) aufweist, die mindestens 1,5-mal größer als eine größte Einführwandhöhe (Y) quer dazu ist, wobei die Einführwand in eine umlaufende distale Endkante (27) des Gehäuses (22) übergeht, die sich entlang der Einführöffnung erstreckt, wobei sich die Dichtung (40) und der Dichtungshalter (50) entlang der distalen Endkante (27) des Gehäuses erstrecken, wobei die Dichtung (40) gegen das eingeführte Rohr (2) abdichtet und der Dichtungshalter (50) die Dichtung an der Stelle hält, wobei der Dichtungshalter eine zylindrische Aufnahmewand (51) umfasst, die sich um die Einführwand (33) erstreckt, wobei die Verriegelung (60) eine erste Verriegelungsvorkehrung (61) an der Einführwand (23) zum verriegelnden Zusammenwirken mit einer zweiten Verriegelungsvorkehrung (66) an der Aufnahmewand (51) umfasst, wobei die erste Verriegelungsvorkehrung (61) eine erste Anlageoberfläche (63) umfasst, die von der distalen Endkante (27) des Gehäuses abgewandt ist, wobei die zweite Verriegelungsvorkehrung (66) eine zweite Anlageoberfläche (68) umfasst, die der ersten Anlageoberfläche (63) zugewandt ist und daran anliegt, und wobei die erste Verriegelungsvorkehrung (61) einen Verriegelungshaken (62) umfasst, der von der Einführwand (23) weg von dem Einführkanal (24) vorsteht und der mit der ersten Anlageoberfläche (63) bereitgestellt ist, und wobei die zweite Verriegelungsvorkehrung (66) eine Verriegelungsöffnung (67) in der Aufnahmewand (51) umfasst, die mit der zweiten Anlageoberfläche (68) bereitgestellt ist, wobei sich der Verriegelungshaken (62) durch die Verriegelungsöffnung (67) erstreckt, wobei das Verfahren den Schritt eines Fertigens des Gehäuses (22) mit der ersten Verriegelungsvorkehrung (61), der Dichtung (40) und des Dichtungshalters (50) mit der zweiten Verriegelungsvorkehrung (66) und den Schritt eines Zusammenbauens der Rohrkupplung (20) durch Bewegen des Dichtungshalters (50) in der Einführrichtung (R) zu und über die distale Endkante (27) des Gehäuses umfasst, wodurch die distale Endkante (27) des Gehäuses in der Aufnahmewand (51) empfangen wird und die erste Verriegelungsvorkehrung (61) in Zusammenwirkung mit der zweiten Verriegelungsvorkehrung (66) gebracht wird, indem die erste Anlageoberfläche (63) in Anlage mit der zweiten Anlageoberfläche (68) gebracht wird.

## Revendications

1. Ensemble de tuyau (1) comprenant un tuyau allongé (2) et un raccord (20) de tuyau pour le raccordement au tuyau, ledit tuyau (2) comprenant une paroi circonférentielle cylindrique (3) qui possède dans sa section transversale la plus grande largeur de tuyau (W) qui est au moins 1,5 fois plus grande que la plus grande hauteur de tuyau (H) transversale à celle-ci, et ledit raccord (20) de tuyau comprenant une partie d'insertion (21) comportant un canal d'insertion (24) doté d'une ouverture d'insertion pour l'insertion d'une extrémité distale (4) du tuyau (2) dans une direction d'insertion (R) dans le raccord (20) de tuyau, ladite partie d'insertion (21) comprenant un boîtier (22), un joint d'étanchéité (40) sur le boîtier pour assurer l'étanchéité contre le tuyau, un support (50) de joint d'étanchéité pour maintenir le joint d'étanchéité sur le boîtier et un verrou (60) entre le boîtier et le support de joint d'étanchéité, ledit boîtier (22) comprenant une paroi d'insertion cylindrique (23) qui délimite le canal d'insertion et qui possède, dans sa section transversale qui est transversale par rapport à la direction d'insertion, la plus grande largeur de paroi d'insertion (X) qui est au moins 1,5 fois plus grande que la plus grande hauteur de paroi d'insertion (Y) transversale à celle-ci, ladite paroi d'insertion fusionnant en un bord d'extrémité distale circonférentielle (27) du boîtier (22) qui s'étend le long de l'ouverture d'insertion, ledit joint d'étanchéité (40) et ledit support (50) de joint d'étanchéité s'étendant le long du bord d'extrémité distale (27) du boîtier, ledit joint d'étanchéité (40) assurant l'étanchéité contre le tuyau inséré (2) et le support (50) de joint d'étanchéité maintenant le joint d'étanchéité en place, ledit support de joint d'étanchéité comprenant une paroi de logement cylindrique (51) qui s'étend autour de la paroi d'insertion (23), ledit verrou (60) comprenant une première disposition de verrouillage (61) sur la paroi d'insertion (23) pour verrouiller une coopération avec une seconde disposition de verrouillage (66) sur la paroi de logement (51), ladite première disposition de verrouillage (61) comprenant une première surface de butée (63) tournant le dos au bord d'extrémité distale (27) du boîtier (22), ladite seconde disposition de verrouillage (66) comprenant une seconde surface de butée (68) qui fait face à la première surface de butée (63) et vient en butée contre celle-ci, **caractérisé en ce que** la première disposition de verrouillage (61) comprend un crochet de verrouillage (62) qui fait saillie à partir de la paroi d'insertion (23) en s'éloignant du canal d'insertion (24) et qui est muni de la première surface de butée (63), et ladite seconde disposition de verrouillage (66) comprenant une ouverture de verrouillage (67) dans la paroi de logement (51) qui est munie de la seconde surface de butée (68), ledit crochet de verrouillage (62) s'étendant à travers l'ouverture de verrouillage (67).

2. Ensemble de tuyau (1) selon la revendication 1, ladite première disposition de verrouillage (61) et ladite seconde disposition de verrouillage (66) coopérantes formant un raccordement à encliquetage unidirectionnel qui s'active par déplacement du support (50) de joint d'étanchéité dans la direction d'insertion (R) sur le bord d'extrémité distale (27) du boîtier (22).

3. Ensemble de tuyau (1) selon l'une quelconque des revendications précédentes, ladite première surface de butée (63) s'étendant transversalement à la direction d'insertion (R).

4. Ensemble de tuyau (1) selon l'une quelconque des revendications précédentes, ledit crochet de verrouillage (62) possédant une longueur de saillie le long de la première surface de butée (63) qui est plus longue qu'une épaisseur de la paroi de logement (51) le long de la seconde surface de butée (68).

5. Ensemble de tuyau (1) selon l'une quelconque des revendications précédentes, ledit crochet de verrouillage (62) faisant saillie le long de la première surface de butée (63) au-delà de la paroi de logement (51) sur une distance qui est plus longue que 1,1 fois, de préférence plus longue que 1,5 fois, mieux encore plus longue que 2,0 fois, et même mieux encore plus longue que 2,5 fois une épaisseur de la paroi de logement (51) le long de la seconde surface de butée (68), ledit crochet de verrouillage (62) faisant saillie le long de la première surface de butée (63) au-delà de la paroi de logement (51) sur une distance qui est inférieure ou égale à 5,0 fois, de préférence inférieure ou égale à 3,0 fois, mieux encore inférieure ou égale à 2,5 fois, et même mieux encore inférieure ou égale à 2,0 fois une épaisseur de la paroi de logement (51) le long de la seconde surface de butée (68).

6. Ensemble de tuyau (1) selon l'une quelconque des revendications précédentes, ledit crochet de verrouillage (62) comprenant une surface en biseau distale (64), ladite surface en biseau distale s'étendant dans la direction d'insertion (R) obliquement en s'éloignant de la paroi d'insertion (23).

7. Ensemble de tuyau (1) selon l'une quelconque des revendications précédentes, ledit crochet de verrouillage (62) faisant saillie à partir de la paroi d'insertion (23) transversalement à un plan de symétrie longitudinal (L) dans lequel la section transversale de la paroi d'insertion (23) possède la plus grande largeur.

8. Ensemble de tuyau (1) selon l'une quelconque des revendications précédentes, ladite première disposition de verrouillage (61) comprenant de multiples crochets de verrouillage (62) qui sont distribués le long de l'ouverture d'insertion, et ladite seconde disposition de verrouillage (66) comprenant de multiples ouvertures de verrouillage correspondantes (67).

9. Ensemble de tuyau (1) selon les revendications 7 et 8, tous les crochets de verrouillage (62) à l'extérieur du plan de symétrie longitudinal (L) faisant saillie transversalement au plan de symétrie longitudinal (L).

10. Ensemble de tuyau (1) selon l'une quelconque des revendications précédentes, ledit crochet de verrouillage (62) étant une douille creuse, ladite première surface de butée (63) étant située sur un côté de la douille qui tourne le dos au bord d'extrémité distale (27) du boîtier (22).

11. Ensemble de tuyau (1) selon l'une quelconque des revendications précédentes, ledit boîtier (22) comprenant une fente de fixation (28) qui s'étend le long de la circonférence du bord d'extrémité distale (27) du boîtier, et ledit joint d'étanchéité (40) comprenant un rebord de verrouillage (41) qui est confiné dans la fente de fixation.

12. Ensemble de tuyau (1) selon la revendication 11, ladite fente de fixation (28) s'ouvrant à l'opposé de la direction d'insertion (R) vers le bord d'extrémité distale du boîtier (22).

13. Ensemble de tuyau (1) selon la revendication 11 ou 12, ledit support (50) de joint d'étanchéité comprenant une paroi de confinement (52) qui fusionne en la paroi de logement (51), ladite paroi de confinement (52) s'étendant le long et au-dessus de la fente de fixation (28) et maintenant le rebord de verrouillage (41) confiné dans la fente de fixation.

14. Ensemble de tuyau (1) selon l'une quelconque des revendications précédentes, ledit joint d'étanchéité (40) comprenant une première lèvre (42) de joint d'étanchéité qui s'étend le long du bord d'extrémité distale (27) du boîtier (22) et qui s'étend à partir du bord d'extrémité distale (27) obliquement dans le canal d'insertion (24) pour venir en butée contre le tuyau inséré (2),
ledit joint d'étanchéité (40) comprenant une seconde lèvre (43) de joint d'étanchéité qui s'étend le long du bord d'extrémité distale (27) du boîtier (22) et qui vient en butée contre la paroi d'insertion (23).

15. Ensemble de tuyau (1) selon une quelconque combinaison des revendications 11 à 14, ledit rebord de verrouillage (41) et ladite première lèvre (42) de joint d'étanchéité et ladite seconde lèvre (43) de joint d'étanchéité lorsqu'elles sont présentes formant une unité.

16. Ensemble de tuyau (1) selon l'une quelconque des revendications 1 à 14, ledit joint d'étanchéité (40) et ledit support (50) de joint d'étanchéité formant une unité.

17. Ensemble de tuyau (1) selon l'une quelconque des revendications précédentes, ledit boîtier (22) étant constitué d'un matériau thermoplastique stable à la forme, en particulier de polychlorure de vinyle (PVC),
ledit joint (40) d'étanchéité étant constitué d'un matériau souple, en particulier d'un caoutchouc naturel ou synthétique, tel que le caoutchouc styrène-butadiène (SBR), ou un éthylène-propylène-diène monomère (EPDM) ou un élastomère thermoplastique (TPE),
ledit support (50) de joint d'étanchéité étant fabriqué à partir d'un matériau thermoplastique, en particulier de polychlorure de vinyle (PVC), de polyéthylène (PE) ou de polypropylène (PP),
ledit tuyau (2) étant constitué d'un matériau thermoplastique stable à la forme, en particulier de polychlorure de vinyle (PVC) ou d'acrylonitrile butadiène styrène (ABS).

18. Ensemble de tuyau (1) selon l'une quelconque des revendications précédentes, comprenant en outre une pièce d'extrémité (80) qui est au moins partiellement insérée dans l'extrémité distale du tuyau (2), ladite pièce d'extrémité comprenant une bague de renforcement cylindrique (81) à l'intérieur de l'extrémité distale du tuyau qui s'étend le long de la paroi circonférentielle (3) et qui vient en butée contre la paroi circonférentielle.

19. Ensemble de tuyau (1) selon la revendication précédente, ladite pièce d'extrémité (80) étant constituée d'un matériau thermoplastique stable à la forme, en particulier de polychlorure de vinyle (PVC) ou d'acrylonitrile butadiène styrène (ABS).

20. Ensemble de tuyau (1) selon l'une quelconque des revendications précédentes, ladite paroi circonférentielle du tuyau (2) et ladite paroi d'insertion (23) du raccord (20) de tuyau possédant une section transversale ovale, ou elliptique, ou ovoïde, et des combinaisons de celles-ci, et de préférence la section transversale étant symétrique ou asymétrique.

21. Ensemble de tuyau (1) selon l'une quelconque des revendications précédentes, ladite partie d'insertion (21) permettant un désalignement du tuyau inséré (2) supérieur ou égal à 2 degrés, de préférence supérieur ou égal à 3 degrés, mieux encore supérieur ou égale à 5 degrés, mieux encore supérieur ou égal à 10 degrés, idéalement inférieur ou égal à 20 degrés.

22. Ensemble de tuyau (1) selon l'une quelconque des revendications précédentes, ledit raccord (20) de tuyau comprenant de multiples parties d'insertion (21) qui sont mutuellement alignées ou sous un angle les unes par rapport aux autres.

23. Procédé permettant la fabrication d'un raccord (20) de tuyau pour le raccordement à un tuyau, ledit raccord (20) de tuyau comprenant une partie d'insertion (21) comportant un canal d'insertion (24) doté d'une ouverture d'insertion pour l'insertion d'une extrémité distale (4) du tuyau (2) dans une direction d'insertion (R) dans le raccord (20) de tuyau, ladite partie d'insertion (21) comprenant un boîtier (22), un joint d'étanchéité (40) sur le boîtier pour assurer l'étanchéité contre le tuyau, un support (50) de joint d'étanchéité pour maintenir le joint d'étanchéité sur le boîtier, et un verrou (60) entre le boîtier et le support de joint d'étanchéité, ledit boîtier (22) comprenant une paroi d'insertion cylindrique (23) qui délimite le canal d'insertion et qui possède dans sa section transversale qui est transversale à la direction d'insertion la plus grande largeur de paroi d'insertion (X) qui est au moins 1,5 fois plus grande que la plus grande hauteur de paroi d'insertion (Y) transversale à celle-ci, ladite paroi d'insertion fusionnant en un bord d'extrémité distale circonférentielle (27) du boîtier (22) qui s'étend le long de l'ouverture d'insertion, ledit joint d'étanchéité (40) et ledit support (50) de joint d'étanchéité s'étendant le long du bord d'extrémité distale (27) du boîtier, ledit joint d'étanchéité (40) assurant l'étanchéité contre le tuyau inséré (2) et ledit support (50) de joint d'étanchéité maintenant le joint d'étanchéité en place, ledit support de joint d'étanchéité comprenant une paroi de logement cylindrique (51) qui s'étend autour de la paroi d'insertion (33), ledit verrou (60) comprenant une première disposition de verrouillage (61) sur la paroi d'insertion (23) pour verrouiller une coopération avec une seconde disposition de verrouillage (66) sur la paroi de logement (51), ladite première disposition de verrouillage (61) comprenant une première surface de butée (63) tournant le dos au bord d'extrémité distale (27) du boîtier, ladite seconde disposition de verrouillage (66) comprenant une seconde surface de butée (68) qui fait face à la première surface de butée (63) et vient en butée contre celle-ci, ladite première disposition de verrouillage (61) comprenant un crochet de verrouillage (62) qui fait saillie à partir de la paroi d'insertion (23) en s'éloignant du canal d'insertion (24) et qui est pourvu de la première surface de butée (63), ladite seconde disposition de verrouillage (66) comprenant une ouverture de verrouillage (67) dans la paroi de logement (51) qui est pourvue de la seconde surface de butée (68), ledit crochet de verrouillage (62) s'étendant à travers l'ouverture de verrouillage (67),
ledit procédé comprenant l'étape de fabrication du boîtier (22) avec la première disposition de verrouillage (61), le joint d'étanchéité (40) et le support (50) de joint d'étanchéité avec la seconde disposition de verrouillage (66), et ladite étape d'assemblage du raccord (20) de tuyau en déplaçant le support (50) de joint d'étanchéité dans la direction d'insertion (R) vers et sur le bord d'extrémité distale (27) du boîtier, moyennant quoi le bord d'extrémité distale (27) du boîtier est reçu dans la paroi de logement (51) et ladite première disposition de verrouillage (61) étant amenée en coopération avec la seconde disposition de verrouillage (66) en amenant la première surface de butée (63) en butée contre la seconde surface de butée (68).
